(19) **Europäisches Patentamt / European Patent Office / Office européen des brevets**

(11) **EP 1 563 170 B1**

(12) **EUROPÄISCHE PATENTSCHRIFT**

(45) Veröffentlichungstag und Bekanntmachung des Hinweises auf die Patenterteilung:
**22.12.2010 Patentblatt 2010/51**

(21) Anmeldenummer: **03809697.0**

(22) Anmeldetag: **11.07.2003**

(51) Int Cl.:
*F01N 9/00* (2006.01)    *F01N 3/023* (2006.01)

(86) Internationale Anmeldenummer:
**PCT/DE2003/002341**

(87) Internationale Veröffentlichungsnummer:
**WO 2004/040103 (13.05.2004 Gazette 2004/20)**

(54) **VERFAHREN ZUR ERKENNUNG DER BELADUNG EINES PARTIKELFILTERS**

METHOD FOR RECOGNITION OF THE LOADING OF A PARTICLE FILTER

PROCEDE POUR RECONNAITRE LA CHARGE D'UN FILTRE A PARTICULES

(84) Benannte Vertragsstaaten:
**DE FR IT SE**

(30) Priorität: **17.10.2002 DE 10248431**

(43) Veröffentlichungstag der Anmeldung:
**17.08.2005 Patentblatt 2005/33**

(73) Patentinhaber: **ROBERT BOSCH GMBH**
**70442 Stuttgart (DE)**

(72) Erfinder:
 • **STEGMAIER, Matthias**
 **73560 Boebingen/Rems (DE)**
 • **SOJKA, Juergen**
 **70839 Gerlingen (DE)**
 • **WALTER, Michael**
 **70806 Kornwestheim (DE)**
 • **ZEIN, Thomas**
 **70174 Stuttgart (DE)**
 • **KRAUTTER, Andreas**
 **71711 Steinheim (DE)**
 • **PLOTE, Holger**
 **A-4017 Linz (AT)**

(56) Entgegenhaltungen:
**EP-A- 1 061 241    EP-A- 1 108 866**
**US-A- 4 986 069    US-A- 5 511 413**
**US-B1- 6 405 528**

 • **PATENT ABSTRACTS OF JAPAN vol. 017, no. 159 (M-1389), 29. März 1993 (1993-03-29) & JP 04 325707 A (TOYOTA MOTOR CORP), 16. November 1992 (1992-11-16)**
 • **EBENER S ET AL: "DRUCKVERLUSTMODELL FUER KERAMISCHE DIESELPARTIKELFILTER" MTZ MOTORTECHNISCHE ZEITSCHRIFT, FRANCKH'SCHE VERLAGSHANDLUNG, ABTEILUNG TECHNIK. STUTTGART, DE, Bd. 61, Nr. 6, Juni 2000 (2000-06), Seiten 414-420,422, XP000958021 ISSN: 0024-8525**
 • **PONTIKAKIS G N ET AL: "Dynamic Filtration Modeling in Foam Filters for Diesel Exhaust" CHEMICAL ENGINEERING COMMUNICATIONS, LONDON, GB, 2001, Seiten 1-26, XP002196576 ISSN: 0098-6445**

## Beschreibung

Die Erfindung betrifft ein Verfahren zur Erkennung der Beladung eines Partikelfilters, insbesondere eines Partikelfilters zur Filterung der Abgase einer Brennkraftmaschine.

Stand der Technik

Aus der DE 100 14 224 A1 geht ein Verfahren und eine Vorrichtung zur Steuerung einer Brennkraftmaschine mit einem Abgasnachbehandlungssystem hervor, bei dem eine den Zustand des Abgasnachbehandlungssystems charakterisierende Größe ausgehend von wenigstens einer Betriebskenngröße der Brennkraftmaschine bestimmt wird.

Aus der DE 101 00 418 A1 ist ein Verfahren und eine Vorrichtung zur Steuerung eines Abgasnachbehandlungssystems bekannt, wobei bei vorliegen erster Betriebszustände der Brennkraftmaschine eine den Zustand des Abgasnachbehandlungssystems charakterisierende Zustandsgröße ausgehend von wenigstens einer Druckdifferenz zwischen dem Druck vor und dem Druck nach dem Abgasnachbehandlungssystem vorgebbar ist und bei vorliegen zweiter Betriebszustände die das Abgasnachbehandlungssystem charakterisierende Zustandsgröße ausgehend von wenigstens einer Betriebskenngröße der Brennkraftmaschine simuliert wird. Als Betriebskenngröße wird hierbei vorzugsweise eine Größe verwendet, die von dem Abgasvolumenstrom, der Drehzahl, der eingespritzten Kraftstoffmenge, der zugeführten Frischluftmenge oder dem Fahrerwunsch abhängt. Bei diesem Abgasnachbehandlungssystem wird der Beladungszustand des Partikelfilters ausgehend von dem Differenzdruck ermittelt. Hierdurch ist eine sehr genaue Erfassung des Beladungszustandes möglich. In zweiten Betriebszuständen dagegen erfolgt eine Simulation des Beladungszustandes. Diese zweiten Betriebszustände sind dadurch charakterisiert, daß sie eine genaue Erfassung nicht ermöglichen, beispielsweise weil die Meßgrößen in bestimmten Betriebszuständen ungenau sind, was hier insbesondere der Fall ist, wenn der Abgasvolumenstrom kleine Werte annimmt. Durch Erfassung des Druckgefälles über dem Partikelfilter sind zwar Rückschlüsse auf die im Partikelfilter angesammelte Rußmasse möglich. Der zu messende Differenzdruck über dem Filter hängt jedoch von den Strömungszuständen im Filter und insbesondere dem Abgasvolumenstrom ab, die nicht berücksichtigt werden.

US 6,405,528 offenbart die Merkmale des Oberbegriffs des Anspruchs 1.

Der Erfindung liegt daher die Aufgabe zugrunde, ein Verfahren zur Erkennung der Beladung eines Partikelfilters zu vermitteln, welches eine weitere Steigerung der Genauigkeit der Erkennung der Beladung des Partikelfilters ermöglicht und insbesondere auch den Abgasvolumenstrom, der durch das Partikelfilter strömt, berücksichtigt.

Vorteile der Erfindung

Diese Aufgabe wird durch die Merkmale des Anspruchs 1 gelöst. Vorteilhafte Ausgestaltungen des Verfahrens sind Gegenstand der Unteransprüche.

Grundidee der Erfindung ist es, als charakteristische Größe für die Beladung den Strömungswiderstand des Filters zu verwenden, der durch die Erfassung des Druckverlustes über dem Filter und die Bestimmung des Abgasvolumenstroms durch das Filter ermittelt wird. Auf diese Weise wird die Ermittlung einer betriebspunktunabhängigen Beladungskennzahl ermöglicht, das heißt der Beladungszustand des Partikelfilters kann unabhängig vom Motorlastpunkt angegeben werden.

Sie kann bei der lediglich ein einziger Temperatursensor erforderlich ist, auch ausgehend von der in Strömungsrichtung vor dem Partikelfilter erfaßten Temperatur mittels eines Modells iterativ bestimmt werden.

Die Temperatur im Partikelfilter wird vorzugsweise ausgehend von der in Strömungsrichtung hinter dem Partikelfilter mittels Temperatursensoren erfaßten Temperatur durch ein Modell bestimmt.

Zur Bestimmung des Drucks im Partikelfilter wird vorteilhafterweise die Druckdifferenz über dem Partikelfilter bestimmt und ausgehend von dieser Druckdifferenz der Druck unter Berücksichtigung weiterer, den Druck beeinflussender Größen im Partikelfilter modelliert.

Ferner kann vorgesehen sein, zur Bestimmung des Drucks im Partikelfilter den Druck vor dem Partikelfilter zu erfassen und ausgehend von diesem Druck unter Berücksichtigung weiterer, den Druck beeinflussender Größen den Druck im Partikelfilter zu modellieren.

Der Vorteil dieser Vorgehensweise, nämlich gemessene physikalische Kenngrößen zur Berechnung der Verhältnisse im Filter, insbesondere der Temperatur und des Drucks im Filter zu verwenden, liegt in einer wesentlich höheren Genauigkeit der Beladungsbestückung.

Zeichnung

Weitere Vorteile und Merkmale der Erfindung sind Gegenstand der nachfolgenden Beschreibung sowie der zeichnerischen Darstellung eines Ausführungsbeispiels der Erfindung. In

Fig. 1    ist schematisch ein Partikelfilter dargestellt, bei dem das erfindungsgemäße Ver- fahren zum Einsatz kommt.

Fig. 2    zeigt schematisch die Definition des Strömungswiderstands des in Fig. 1 darge- stellten Partikelfilters.

<u>Beschreibung der Ausführungsbeispiele</u>

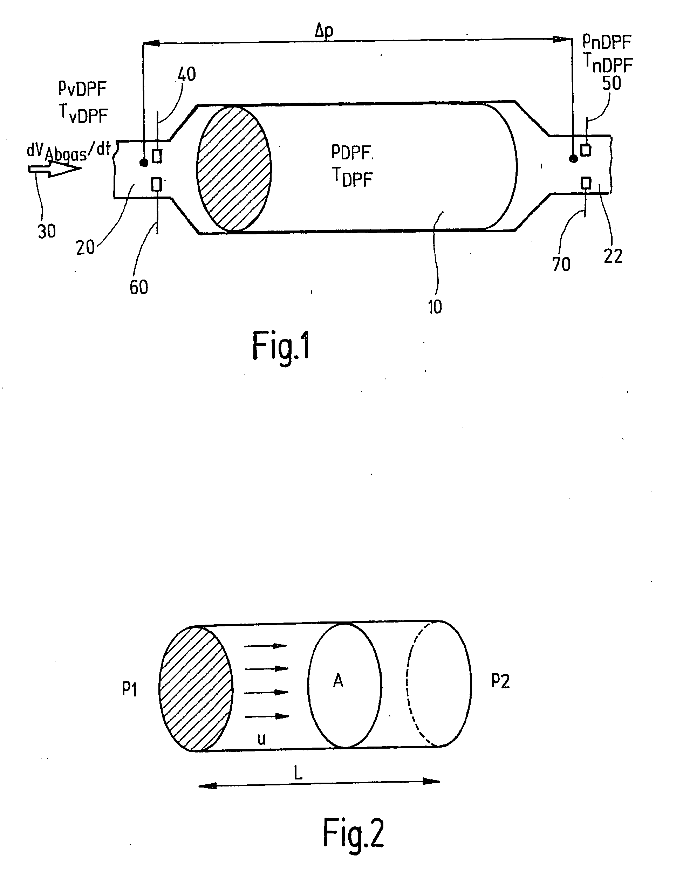

Einem Partikelfilter 10, dargestellt in Fig. 1, werden über eine Abgasleitung 20 Abgase (schematisch durch einen Pfeil 30 dargestellt) zugeführt. Über eine Leitung 22 gelangen Abgase in die Umgebung, die in dem Filter 10 gereinigt werden. Der Filter 10 kann beispielsweise in einem Abgasnachbehandlungssystem angeordnet sein, wie es zum Beispiel aus der DE 100 14 224 A1, insbesondere aus Spalte 1, Zeilen 67 bis Spalte 3, auf die in dieser Hinsicht Bezug genommen wird und deren Inhalt hiermit in diese Anmeldung aufgenommen wird, dargestellt ist.

Die Strömungsverhältnisse in dem Partikelfilter 10 sind schematisch in Fig. 2 dargestellt. Der Druckverlust in einem durchströmten Filter kann näherungsweise mit dem sogenannten Darcy-Gesetz bestimmt werden. Das Filter 10 wird hierbei als ein poröses Medium aufgefaßt. Unter der Annahme die Strömung sei stationär und unter Vernachlässigung von Ein- und Ausströmverlusten sowie quadratischer Korrekturen des Darcy-Gesetzes ergibt sich folgender Druckgradient:

$$- dp/dx = (\nu/K) \cdot u$$

wobei $\nu$ die Viskosität des Gases, K die Permeabilität des Filters 10 und u die Geschwindigkeit des strömenden Gases darstellen. Der Strömungswiderstand $resflow_{DPF}$ des Partikelfilters 10 kann als Quotient aus der Druckdifferenz über dem Filter 10 und dem das Filter 10 durchströmenden Abgasvolumenstrom angenommen werden:

$$resflow_{DPF} = (p_{vDPF} - p_{nDPF})/(dV_{Abgas}/dt) = \Delta p_{DPF}/(dV_{Abgas}/dt)$$

wobei $p_{vDPF}$ der Druck vor dem Filter und $p_{nDPF}$ der Druck nach dem Filter, sowie $dV_{Ab\text{-}gas}/dt$ der Volumenstrom des Abgases sind. Dieser Abgasvolumenstrom kann gemäß folgender Gleichung bestimmt werden, wobei der Luftmassenstrom $dm_{Luft}/dt$ durch einen Luftmassenmesser sowie der Massenstrom des Kraftstoffs, beispielsweise der Massenstrom von Dieselkraftstoff $dm_{Diesel}/dt$ in einer Steuereinrichtung bestimmt werden können.

$$dV_{Abgas}/dt = ((dm_{Luft}/dt) + (dm_{Diesel}/dt)) \cdot R \cdot T/p$$

Aus den vorstehenden Gleichungen und mit der Beziehung

$$U \cdot A = dV_{Abgas}/dt$$

ergibt sich unter der Berücksichtigung, daß die Viskosität $\nu$ des Gases ebenfalls temperaturabhängig ist für den Strömungswiderstand folgender Zusammenhang:

$$resflow_{DPF} = \Delta p_{DPF}/(dV_{Abgas}/dt) = (L \cdot \nu(T))/(A \cdot K),$$

wobei L die Länge des Filters 10 und A dessen Querschnittsfläche bedeuten, die nicht variabel sind und damit Kennwerte des Filters 10 darstellen. Der obenerwähnte Zusammenhang ist gültig, sofern das Filter 10 nicht mit Ruß beladen ist. Eine Beladung des Filters 10 mit Ruß ändert die Permeabilität K und damit den Strömungswiderstand $resflow_{DPF}$. Mit einer beladungsabhängigen Permeabilität K* ergibt sich für den Strömungswiderstand folgender Zusammenhang;

$$\mathrm{resflow^*_{DPF}} = (\Delta p_{DPF}^*/(dV_{Abgas}/dt)) \cdot (v(T_O)/v(T)) = (L/A) \cdot (v(T_O)/K^*) = \mathrm{const}/K^*$$

Es ändern sich mit anderen Worten abhängig von der Beladung die Permeabilität und damit der Strömungswiderstand des Partikelfilters 10, wobei zu Bestimmung des Strömungswiderstands die Temperatur T und der Druck p im Filter 10 bekannt sein müssen. Um diese zu ermitteln, sind nun verschiedene Vorgehensweisen vorgesehen.

Um beispielsweise die Temperatur im Filter 10 zu ermitteln, können in Abgasströmungsrichtung ein Temperatursensor 40 vor dem Filter 10 und ein Temperatursensor 50 nach dem Filter 10 angeordnet sein. Mit Erfassung der Temperaturen $T_{vDPF}$ vor und $T_{nDPF}$ nach dem Filter 10 kann durch Mittelung dieser beiden Temperaturen eine mittlere Gastemperatur $T_{Gas\_mittel}$ bestimmt werden.

$$T_{Gas\_mittel} = 0{,}5 \cdot (T_{vDPF} + T_{nDPF}).$$

Darüber hinaus kann unter der Annahme, daß die Abgastemperatur beim Durchströmen des Filtermaterials der des Filters 10 selbst entspricht, eine Wärmebilanz am Filter 10 zur Verbesserung der Modellierung führen, wobei diese Modellierung gemäß folgender Rechenvorschrift erfolgt:

$$T_{DPF} = (1/C_{DPF}) \cdot \int (dm_{Abgas}/dt) \cdot c_{pAbgas} \cdot (T_{nDPF} - T_{vDPF}) \cdot dt$$

Hierbei bedeuten $C_{DPF}$ die spezifische Wärmekapazität des Filters und $c_{pAbgas}$ die Wärmekapazität des Abgasmassenstroms $dm_{Abgas}/dt$.

Ein anderes Ausführungsbeispiel sieht vor, nur den Temperatursensor 40 vor dem Filter 10 zu verwenden. In diesem Falle erfolgt die Bestimmung der Temperatur nach dem Filter 10 auf der Basis der vorstehenden Gleichung iterativ gemäß folgender Iteration:

$$T_{nDPF} = (T_{DPF} \cdot \beta) + (T_{nDPF} \cdot (1-\beta))$$

Hierbei wird bei einer ersten Berechnung in einem (nicht dargestellten) Steuergerät die Partikelfiltertemperatur $T_{DPF}$ durch einen Tnitialisierungswert vorgegeben. Ab einem zweiten Iterationsschritt wird die Temperatur $T_{DPF}$ aus dem vorhergehenden Iterationsschritt verwendet. Dies ist deshalb möglich, weil sich die Temperatur des Filters 10 in wesentlich größeren Zeitskalen ändert als die Rechenzeit des Modells beträgt. Dabei gibt die verwendete Größe $\beta$ an, welcher Teil des Abgasstromes am Wärmeaustausch mit dem Filter 10 beteiligt ist. Die Ergänzung $(1-\beta)$ ist demgemäß der Teil des Abgasstromes, welcher ohne Wärmeaustausch den Filter 10 passieren kann.

Der Druck in dem Filter $T_{DPF}$ wird auf nachfolgend beschriebene Weise bestimmt. Üblicherweise existiert ein Drucksensor 60 in Strömungsrichtung vor dem Filter 10 und ein Drucksensor 70 in Strömungsrichtung nach dem Filter 10 oder ein Differenzdrucksensor über dem Filter 10, welche einen Differenzdruck über dem Filter 10 ermitteln, der den Druckverlust des Filters 10 angibt. Darüber hinaus kann auch vorgesehen sein, lediglich nur den einen Drucksensor 60 in Strömungsrichtung vor dem Filter 10 zur Bestimmung des Drucks im Filter 10 zu verwenden.

Der Druck im Filter 10 $p_{DPF}$ ergibt sich mit dem Atmosphärendruck $p_{atm}$ und dem Druckverlust eines Schalldämpfers, der in der Abgasleitung 22 angeordnet ist (nicht dargestellt) $\Delta p_{Schalldämpfer}$, sowie dem Druckverlust aufgrund des Filters $\Delta p_{DPF}$ gemäß folgender Gleichung:

$$p_{DPF} = p_{atm} + \Delta p_{Schalldämpfer} + 0{,}5 * \Delta p_{DPF}$$

Wenn lediglich der Absolutdrucksensor 60 vor dem Partikelfilter 10 vorgesehen ist, gemäß folgender Gleichung:

$$p_{DPF} = 0{,}5*(p_{atm} + \Delta p_{Schalldämpfer} + p_{vPF}).$$

Der große Vorteil vorbeschriebener Verfahren ist darin zu sehen, daß der Beladungszustand bei Verwendung des Filters 10 im Abgasnachbehandlungssystem einer Brennkraftmaschine unabhängig vom Motorlastpunkt angegeben werden kann. Durch die Umrechnung der gemessenen physikalischen Kenngrößen in Größen, welche die Verhältnisse im Filter 10 repräsentieren, wird eine wesentlich höhere Genauigkeit der Beladungsbestimmung erzielt.

**Patentansprüche**

1. Verfahren zur Erkennung der Beladung eines Partikelfilters (10), bei dem eine den Strömungswiderstand des Partikelfilters (10) charakterisierende Größe ausgehend von der Temperatur im Partikelfilter (10) und ausgehend von der Druckdifferenz ($\Delta p$) über dem Partikelfilter (10) bestimmt wird und bei dem aus dem Strömungswiderstand auf die Beladung des Partikelfilters (10) geschlossen wird, **dadurch gekennzeichnet, dass** die Temperatur ($T_{vDPF}$) stromaufwärts vor dem Partikelfilter (10) erfasst wird und dass die Temperatur ($T_{DPF}$) im Partikelfilter (10) ausgehend von der erfassten Temperatur ($T_{vDPF}$) durch ein Modell iterativ bestimmt wird, welches die Wärmekapazität ($C_{DPF}$) des Partikelfilters (10), die Wärmekapazität ($C_{pAbgas}$) des Abgases, den Abgasmassenstrom ($dm_{Abgas}/dt$) sowie die Temperatur stromabwärts nach dem Partikelfilter (10) berücksichtigt.

2. Verfahren nach Anspruch 1, **dadurch gekennzeichnet, dass** die Temperatur ($T_{nDPF}$) stromabwärts nach dem Partikelfilter (10) erfasst wird.

3. Verfahren nach Anspruch 1, **dadurch gekennzeichnet, dass** zur Bestimmung des Drucks ($P_{DPF}$) im Partikelfilter (10) die Druckdifferenz ($\Delta p$) über dem Partikelfilter (10) bestimmt wird und ausgehend von dieser Druckdifferenz ($\Delta p$) der Druck ($P_{DPF}$) im Partikelfilter (10) modelliert wird.

4. Verfahren nach Anspruch 1, **dadurch gekennzeichnet, dass** zur Bestimmung des Drucks ($P_{DPF}$) im Partikelfilter (10) der Druck ($P_{vDPF}$) stromaufwärts vor dem Partikelfilter (10) erfasst wird und ausgehend von diesem Druck ($P_{vDPF}$) der Druck ($P_{DPF}$) im Partikelfilter (10) modelliert wird.

5. Verfahren nach Anspruch 1, **dadurch gekennzeichnet, dass** das Partikelfilter (10) zur Filterung der Abgase einer Brennkraftmaschine vorgesehen ist.

**Claims**

1. Method for detecting the loading of a particle filter (10), in which method a variable which characterizes the flow resistance of the particle filter (10) is determined taking as a starting point the temperature in the particle filter (10) and the pressure difference ($\Delta p$) across the particle filter (10), and in which method the loading of the particle filter (10) is inferred from the flow resistance, **characterized in that** the temperature ($T_{VDPF}$) upstream of the particle filter (10) is measured and **in that** the temperature ($T_{DPF}$) in the particle filter (10) is determined iteratively, taking the measured temperature ($T_{vDPF}$) as a starting point, by means of a model which takes into consideration the heat capacity ($C_{DPF}$) of the particle filter (10), the heat capacity ($C_{pAbgas}$) of the exhaust gas, the exhaust-gas mass flow ($dm_{Abgas}/dt$) and the temperature downstream of the particle filter (10).

2. Method according to Claim 1, **characterized in that** the temperature ($T_{nDPF}$) downstream of the particle filter (10) is measured.

3. Method according to Claim 1, **characterized in that**, to determine the pressure ($P_{DPF}$) in the particle filter (10), the pressure difference ($\Delta p$) across the particle filter (10) is determined, and the pressure ($P_{DPF}$) in the particle filter (10) is modelled taking said pressure difference ($\Delta p$) as a starting point.

4. Method according to Claim 1, **characterized in that**, to determine the pressure ($P_{DPF}$) in the particle filter (10), the pressure ($P_{vDPF}$) upstream of the particle filter (10) is measured and the pressure ($P_{DPF}$) in the particle filter (10) is modelled taking said pressure ($P_{vDPF}$) as a starting point.

**5.** Method according to Claim 1, **characterized in that** the particle filter (10) is provided for filtering the exhaust gases of an internal combustion engine.

**Revendications**

**1.** Procédé pour reconnaître la charge d'un filtre à particules (10), dans lequel une valeur caractérisant la résistance à l'écoulement du filtre à particules (10) est déterminée à partir de la température dans le filtre à particules (10) et à partir de la différence de pression ($\Delta$p) en travers du filtre à particules (10), et dans lequel on conclut, à partir de la résistance à l'écoulement, la charge du filtre à particules (10), **caractérisé en ce que** la température ($T_{vDPF}$) en amont du filtre à particules (10) est détectée et **en ce que** la température ($T_{DPF}$) dans le filtre à particules (10) est déterminée de manière itérative par un modèle à partir de la température détectée ($T_{vDPF}$), lequel modèle tient compte de la capacité thermique ($C_{DPF}$) du filtre à particules (10), de la capacité thermique ($C_{pAbgas}$) du gaz d'échappement, du débit volumique de gaz d'échappement ($dm_{Abgas}/dt$) ainsi que de la température en aval après le filtre à particules (10).

**2.** Procédé selon la revendication 1, **caractérisé en ce que** l'on détecte la température ($T_{nDPF}$) en aval du filtre à particules (10).

**3.** Procédé selon l'une quelconque des revendications 1, **caractérisé en ce que** pour déterminer la pression ($P_{DPF}$) dans le filtre à particules (10), la différence de pression ($\Delta$p) est déterminée en travers du filtre à particules (10) et la pression ($P_{DPF}$) dans le filtre à particules (10) est modélisée à partir de cette différence de pression ($\Delta$p) .

**4.** Procédé selon la revendication 1, **caractérisé en ce que** pour déterminer la pression ($P_{DPF}$) dans le filtre à particules (10), la pression ($P_{vDPF}$) en amont avant le filtre à particules (10) est détectée, et la pression ($P_{DPF}$) dans le filtre à particules (10) est modélisée à partir de cette pression ($P_{vDPF}$).

**5.** Procédé selon la revendication 1, **caractérisé en ce que** le filtre à particules (10) est prévu pour filtrer les gaz d'échappement d'un moteur à combustion interne.

$\Delta p$

$p_{nDPF}$
$T_{nDPF}$
50

$p_{vDPF}$
$T_{vDPF}$

40

$\frac{dV_{Abgas}}{dt}$

30

$p_{DPF}$
$T_{DPF}$

20

60

10

70

22

## Fig.1

$p_1$

A

$p_2$

u

L

## Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10014224 A1
- DE 10100418 A1
- US 6405528 B